# EUROPÄISCHE PATENTSCHRIFT

(11) **EP 1 777 061 B1**
(45) Veröffentlichungstag und Bekanntmachung des Hinweises auf die Patenterteilung: **17.08.2016**
(21) Anmeldenummer: 06019767.0
(22) Anmeldetag: 21.09.2006
(51) Int. Cl.: B29C 69/00, B29C 45/16, B29C 65/02

(54) **Verfahren zur Herstellung von Kunststoffkörpern**
Process for manufacturing plastic bodies
Procédé pour fabriquer des pièces en matière plastique

(30) Priorität: 21.10.2005 DE 102005050570
(43) Veröffentlichungstag der Anmeldung: 25.04.2007
(73) Patentinhaber: Bayerische Motoren Werke Aktiengesellschaft, 80809 München (DE)
(72) Erfinder: Feichtenschlager, Nikolaus, 5280 Braunau (AT); Junger, Andreas, 5131 Franking (DE); Auzinger, Christian, 4963 St. Peter/Hart (AT); Seidl, Philipp, 4963 St. Peter/Hart (AT); Katzlberger, Erich, 4931 Mettmach (AT); Eisterlehner, Leopold, 4594 Steinbach/Stayr (AT); Zaleschak, Hannes, 4052 Ansfelden (AT)

(56) Entgegenhaltungen:
- JP-A- 5 200 903
- JP-A- 2003 128 059
- SU-A1- 423 668

## Beschreibung

Die vorliegende Erfindung betrifft ein Verfahren zur Herstellung von Kunststoffform- bzw. Kunststoffhohlkörpern, vorzugsweise zur Ausbildung von Bauteilen zur Luftführung für Brennkraftmaschinen.

Derartige Bauteile zur Luftführung können beispielsweise Ansaugrohre, Saugrohrmodule, Verbindungsrohre zwischen Turboladern und der Brennkraftmaschine, Filterrohre oder dergleichen Elemente sein.

Derartige Bauteile werden in der Regel von Form- und Hohlkörpern aus Kunststoff gebildet, die sich auch in komplexer Gestaltung kostengünstig herstellen lassen.

Als Kunststoff werden meist thermoplastische Formmassen eingesetzt, die sich durch Blasformen, über Schmelzkerntechnik oder über Spritzgießtechnik in die notwendige Gestaltung bringen lassen.

Aus JP 05-200903 A geht ein Hohlkörper hervor, der aus Kunststoff hergestellt ist, wobei zwei halbzylindrische gekrümmte Elemente aus harten und weichen Kunststoffteilen zusammengesetzt werden. JP 2003-128059 A offenbart einen mehrschichtigen Behälter mit einer Sperrschicht aus einer Kunststoffverbindung. SU 423 668 A1 beschreibt ein Verfahren zum stirnseitigen Verbinden zweier Rohrabschnitte mit einer Stützmanschette um die Verbindungsstelle.

Eine in der Fachwelt gebräuchliche Verfahrensweise zur Herstellung derartiger Kunststoffform- bzw.

Kunststoffhohlkörper in Spritzgießtechnik ist beispielsweise aus der DE-OS 197 01 118 bekannt. Bei dieser bekannten, die Gattung der vorliegenden Erfindung bildenden Verfahrensweise werden zwei Halbschalen in Spritzgießtechnik hergestellt, danach zusammengefügt und über Kunststoffschweißtechnik miteinander verbunden.

Die Ausbildung der zu verbindenden Form- oder Hohlkörperelemente als Halbschalen eröffnet eine Vielzahl von Gestaltungsmöglichkeiten, lässt sich aufgrund des Einsatzes von gleichem Material für beide Halbschalen gut verschweißen und führt zu einem sehr stabilen Kunststoffform- bzw. Kunststoffhohlkörper.

Für bestimmte Anwendungsbereiche ist es wünschenswert, einen Kunststoffform- bzw. Kunststoffhohlkörper aus Kunststoffmaterialien mit verschiedenen Eigenschaften herzustellen, d.h. die Kunststoffform- bzw. Kunststoffhohlkörper unterscheiden sich z.B. im Hinblick auf ihre thermischen oder optischen Eigenschaften oder im Hinblick auf ihre Beständigkeit gegenüber verschiedenen Medien.

Auch kann es wünschenswert sein, harte und weiche Kunststoffmaterialien, d.h. verschiedene Komponenten in einem Kunststoffform- bzw. Kunststoffhohlkörper zu vereinigen. Dies kann beispielsweise bei Rohrkonstruktionen der Fall sein, bei denen - wie bei Verbindungsrohren zwischen Turboladern und Brennkraftmaschinen - ein Teil der Rohrkonstruktion fahrzeugfest und ein anderer Teil beweglich gelagert sein muss. Hierzu werden in aller Regel so genannte Balgabschnitte vorgesehen, die aus relativ weichem Kunststoffmaterial bestehen, an das sich hartes Kunststoffmaterial zu beiden Seiten anschließt. Derartige Rohrkonstruktionen werden beispielsweise zur Verringerung bzw. zur Vermeidung von Vibrations- und Schallübertragungseffekten eingesetzt.

Harte und weiche Kunststoffmaterialien, d.h. harte und weiche Komponenten können zu einstückigen Kunststoffform- bzw. Kunststoffhohlkörpern in so genannter Blasformtechnik geformt werden. Dieser Technik sind allerdings hinsichtlich der Formgebung Grenzen gesetzt. Kunststoffform- bzw. Kunststoffhohlkörper komplexer Form mit Hinterschneidungen, Ansätzen oder seitlich auskragenden Bereichen können mit Blasformtechnik nicht oder nur mit erheblichem fertigungstechnischen und verfahrenstechnischen Aufwand hergestellt werden.

Außer in Blasformtechnik können harte und weiche Kunststoffmaterialien in so genannter Spritzgießtechnik geformt werden. Dabei werden bisher die harten und die weichen Kunststoffmaterialien, d.h. die harten und die weichen Komponenten jeweils separat hergestellt und im Anschluss daran zu einem einheitlichen Gegenstand miteinander verschweißt. Bei Kunststoffform- bzw. Kunststoffhohlkörpern komplexer Form ist dieser Verschweißvorgang allerdings sehr aufwändig und erfordert einen erheblichen vorrichtungstechnischen Aufwand.

Aufgabe der vorliegenden Erfindung ist es, eine neuartige Verfahrensweise zur Verfügung zu stellen, mit der hinsichtlich der Formgebung sehr komplexe Kunststoffform- bzw. Kunststoffhohlkörper mittels eines einfachen Schweißprozesses ohne hohen fertigungstechnischen Aufwand miteinander verbunden werden können.

Diese Aufgabe wird bei einer Verfahrensweise der gattungsgemäßen Art dadurch gelöst,
- dass die miteinander zu verbindenden Form- oder Hohlkörperelemente jeweils aus mindestens zwei Komponenten im an sich bekannten Mehrkomponentenspritzgießverfahren jeweils separat hergestellt,
- im Bereich der Verbindungsstellen mit der für die jeweilige Komponente vorgegebenen Schmelztemperatur jeweils gleichzeitig aufgeschmolzen,
- und im Anschluss daran unter Einwirkung eines Pressdruckes zusammengefügt werden.

Der Erfindung liegt die Erkenntnis zugrunde, dass der vorrichtungs- und verfahrenstechnische Aufwand für den Schweißvorgang in der Hauptsache von der Lage der Schweißnaht bzw. der Schweißnähte im Kunststoffform- bzw. Kunststoffhohlkörper abhängt. Bei bekannten Herstellungsverfahren wird dies wesentlich von der Anordnung der verschiedenen Komponenten im Kunststoffform- bzw. Kunststoffhohlkörper bestimmt. So müssen die Schweißnaht bzw. die Schweißnähte stets im Übergangsbereich von einer auf die andere Komponente angeordnet werden, wodurch die Anordnung verschiedener Schweißzonen und Schweißebenen erforderlich wird. Dies wiederum schränkt insbesondere bei komplexen Formen die Gestaltungsmöglichkeiten für die Kunststoffform- bzw. Kunststoffhohlkörper ein.

Der Erfindung liegt nun der Gedanke zugrunde, zur Reduzierung des Aufwandes für den Schweißprozess die Schweißnähte möglichst in eine, sich über den gesamten Kunststoffform- bzw. Kunststoffhohlkörper erstreckende, nach Möglichkeit einheitliche Ebene zu legen und quer zur Erstreckungsrichtung verlaufende unterschiedliche Schweißzonen zu vermeiden. Diese einheitliche Ebene kann dabei auch gekrümmt sein bzw. einen unsteten Verlauf haben. Wesentlich ist lediglich, dass eine möglichst einheitliche Schweißebene mit durchgehender Schweißnaht gebildet wird, die für den Schweißprozess gut zugänglich ist, jedoch ohne funktionellen Nachteil an die für die Gestaltung zweckmäßigste Stelle gelegt werden kann. Dies setzt allerdings voraus, dass die miteinander zu verbindenden Form- oder Hohlkörperelemente, die später zu dem Kunststoffform- bzw. Kunststoffhohlkörper zusammengefügt werden, jeweils für sich aus mindestens zwei Komponenten bestehen, d.h. die jeweils notwendigen Komponenten bereits beinhalten. Hierzu eignet sich insbesondere das an sich bekannte Mehrkomponentenspritzgießverfahren, mit dem die miteinander zu verbindenden, aus mindestens zwei Komponenten bestehenden Form- oder Hohlkörperelemente jeweils separat hergestellt werden. Aufgrund der erfindungsgemäß vorgesehenen einheitlichen Schweißebene ist es dann auch möglich, zur Durchführung des Schweißvorganges die Schweißnaht über die gesamte Länge gleichzeitig auf Schmelztemperatur erhitzen, jedoch in jedem Komponentenbereich jeweils mit der für die jeweilige Komponente vorgegebenen Schmelztemperatur. Im Anschluss daran ist es dann nurmehr notwendig, die in dieser Weise vorbereiteten Form- oder Hohlkörperelemente unter Einwirkung eines Pressdruckes zusammenzufügen.

Im Folgenden ist das erfindungsgemäße Verfahren anhand von zwei nach dem Verfahren hergestellten Kunststoffform- bzw. Kunststoffhohlkörpern näher beschrieben und erläutert.
- Figuren 1 bis 3: zeigen einen ersten Kunststoffform- bzw. Kunststoffhohlkörper in Form eines einfachen, mit einem Faltenbalg ausgestatteten Rohrabschnittes, und
- Figuren 4 bis 7: zeigen einen zweiten Kunststoffform- bzw. Kunststoffhohlkörper in Form eines kompliziert geformten, ebenfalls mit einem Faltenbalg ausgestatteten Reinluftrohres für eine Brennkraftmaschine.

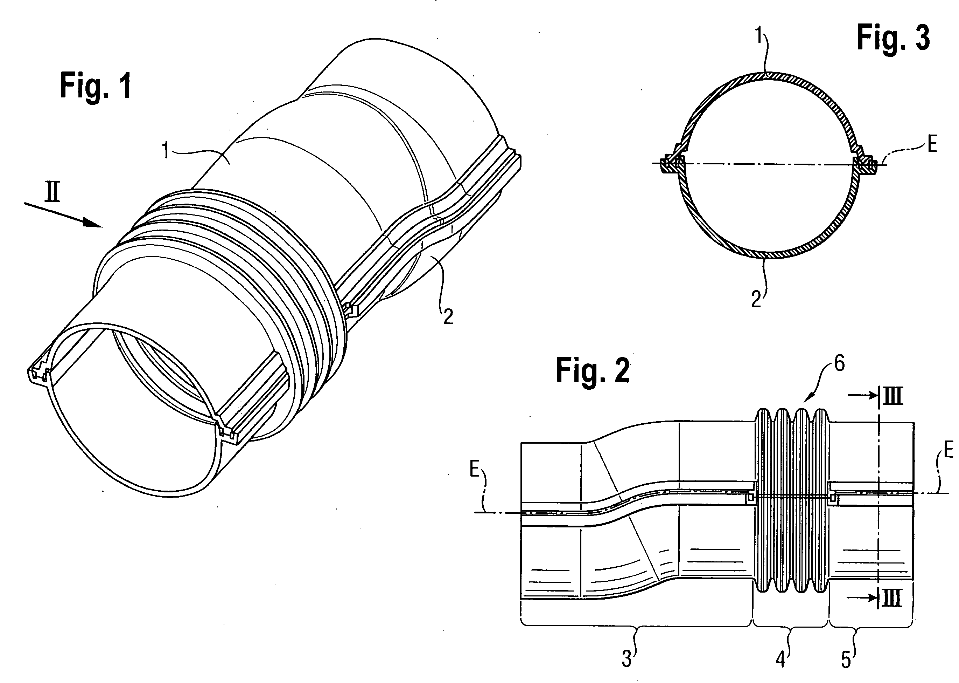

Der in den Figuren 1 bis 3 gezeigte Rohrabschnitt ist im fertigen Zustand dargestellt, bei dem die zu verbindenden Formelemente bereits miteinander verschweißt sind.

Vor diesem Schweißvorgang wurden hierzu in einem ersten Schritt im bekannten Spritzgießverfahren zwei Rohrabschnittshälften 1 und 2 getrennt voneinander hergestellt. Diese Rohrabschnittshälften 1 und 2 wurden jeweils aus einem Halbschalenabschnitt 3 aus hartem Kunststoff, einem daran anschließenden Halbschalenabschnitt 4 aus weichem Kunststoff (zur Bildung einer Hälfte des späteren Faltenbalges 6) sowie aus einem an diesen anschließenden Halbschalenabschnitt 5 aus hartem Kunststoff hergestellt. Die Halbschalenabschnitte 3 und 5 bestehen bei dem dargestellten Rohrabschnitt aus dem selben Kunststoffmaterial, so dass die beiden Rohrabschnittshälften 1 und 2 jeweils aus zwei verschiedenen Komponenten im bekannten Mehrkomponentenspritzgießverfahren hergestellt worden sind.

Wie sich aus den Figuren 1 bis 3 ferner ergibt, wird bei der Gestaltung des Rohrabschnitts dafür Sorge getragen, dass die späteren Verbindungsstellen der Halbschalenabschnitte der beiden Rohrabschnittshälften untereinander im Wesentlichen in einer sich über die gesamte Länge des Rohrabschnittes erstreckenden Ebene E liegen, wie dies in den Figuren 2 und 3 angedeutet ist. Diese Ebene E weist im Bereich des Halbschalenabschnittes 3 eine Krümmung auf.

Gemäß dem erfindungsgemäßen Verfahren werden dann die auf die beschriebene Weise hergestellten Rohrabschnittshälften 1 und 2 im Bereich der Verbindungsstellen gleichzeitig aufgeschmolzen und im Anschluss daran unter Einwirkung eines Pressdruckes zusammengefügt. Erfindungsgemäß wird dabei Sorge getragen, dass der Aufschmelzvorgang in den Halbschalenabschnitten 3, 4 und 5 mit der für die jeweilige Komponente vorgegebenen Schmelztemperatur erfolgt. Dieses Aufschmelzen mit an die jeweilige Komponente angepasster Schmelztemperatur ist ohne großen fertigungstechnischen Aufwand möglich, da alle Verbindungsstellen in der Ebene E liegen, die bei im Abstand voneinander angeordneten Rohrabschnittshälften 1 und 2 relativ problemlos zugänglich ist.

Der Aufschmelzvorgang kann in der verschiedensten Weise vorgenommen werden. Wesentlich ist dabei lediglich, dass dafür Sorge getragen wird, dass die Verbindungsstellen mit der für die jeweilige Komponente vorgegebenen Schmelztemperatur erhitzt werden.

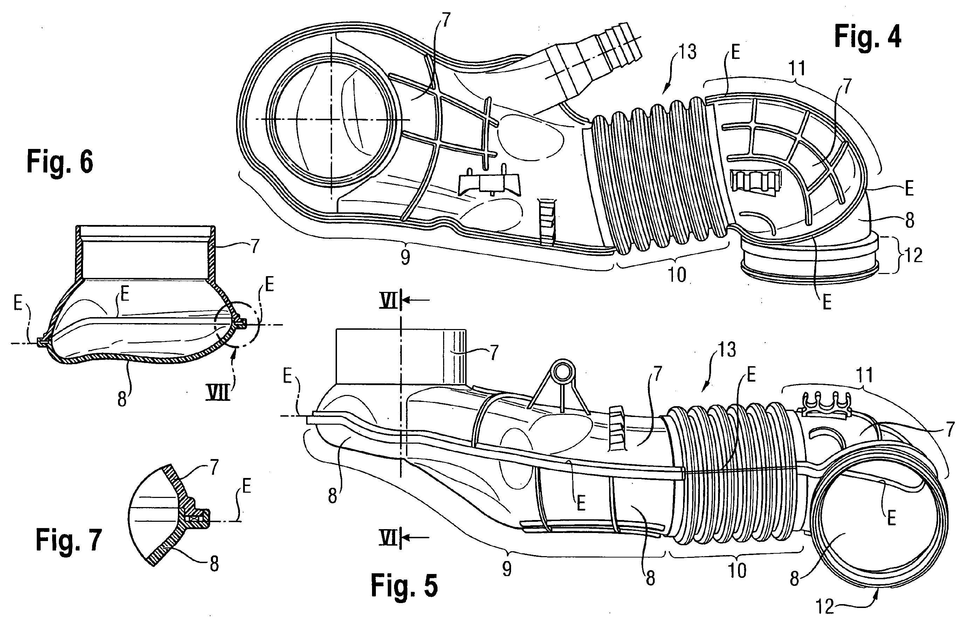

Das dem erfindungsgemäßen Verfahren zugrunde liegende Prinzip wird besonders bei kompliziert geformten Kunststoffform- bzw. Kunststoffhohlkörpern erkennbar. Ein derartiger kompliziert geformter Kunststoffform- bzw. Kunststoffhohlkörper in Form eines Reinluftrohres ist in den Figuren 4 bis 7 dargestellt.

Die Figuren 4 bis 5 zeigen dabei das Reinluftrohr in zwei Seitenansichten, die in etwa 90° zueinander versetzt sind. Figur 6 zeigt dann einen Schnitt in der Ebene VI-VI der Figur 5 und Figur 7 eine Einzelheit VII der Figur 6.

Das in den Figuren 4 bis 7 dargestellte Reinluftrohr ist ebenfalls aus zwei Rohrabschnittshälften 7 und 8 zusammengesetzt, die getrennt voneinander hergestellt werden. Die Rohrabschnittshälften 7 und 8 bestehen im vorliegenden Ausführungsbeispiel jeweils aus drei Halbschalenabschnitten und einem Anschlussabschnitt. Im Einzelnen sind dies ein Halbschalenabschnitt 9 aus hartem Kunststoffmaterial, ein daran anschließender Halbschalenabschnitt 10 aus weichem Kunststoffmaterial (zur Bildung einer Hälfte des späteren Faltenbalges 13), ein daran anschließender Halbschalenabschnitt 11 aus hartem Kunststoffmaterial sowie ein an diesen anschließender Anschlussabschnitt 12 aus weichem Kunststoffmaterial, der eine flexible Manschette für die Ankopplung des Reinluftrohres an eine nicht dargestellte Rohrleitung bildet.

Wie im Falle des Rohrabschnittes nach den Figuren 1 und 3 sind auch bei dem in den Figuren 4 bis 7 dargestellten Reinluftrohr die Verbindungsstellen der Halbschalenabschnitte 9 bis 11 der beiden Rohrabschnittshälften 7 und 8 in einer sich über die gesamte Länge des Reinluftrohres erstreckenden, d.h. durchlaufenden Ebene E angeordnet, wie dies in den Figuren 4 bis 7 angedeutet ist.

Diese Ebene E kann dabei derart gelegt werden, dass im Bedarfsfalle bestimmte Abschnitte, wie beispielsweise der Anschlussabschnitt 12 (vgl. Figur 4) von der Unterteilung in Halbschalen ausgenommen werden kann, beispielsweise um eine für die Abdichtung störende Naht zu vermeiden.

Gemäß dem erfindungsgemäßen Verfahren werden dann die auf die beschriebene Weise hergestellten Rohrabschnittshälften 7 und 8 im Bereich der Verbindungsstellen gleichzeitig aufgeschmolzen und im Anschluss daran unter Einwirkung eines Pressdruckes zusammengefügt. Erfindungsgemäß wird dabei Sorge getragen, dass der Aufschmelzvorgang in den Halbschalenabschnitten 9, 10 und 11 mit der für die jeweilige Komponente vorgegebenen Schmelztemperatur erfolgt. Dieses aufschmelzen mit an die jeweilige Komponente angepasster Schmelztemperatur ist ohne großen fertigungstechnischen Aufwand möglich, da alle Verbindungsstellen in der Ebene E liegen, die bei im Abstand voneinander angeordneten Rohrabschnittshälften 7 und 8 relativ problemlos zugänglich ist.

Der Aufschmelzvorgang kann auch hier in der verschiedensten Weise vorgenommen werden. Wesentlich ist dabei lediglich, dass dafür Sorge getragen wird, dass die Verbindungsstellen mit der für die jeweilige Komponente vorgegebenen Schmelztemperatur erhitzt werden.

## Patentansprüche

1. Verfahren zur Herstellung von Kunststoffform- bzw. Kunststoffhohlkörpern (1, 2; 7, 8), vorzugsweise zur Ausbildung von Bauteilen (6) zur Luftführung für Brennkraftmaschinen, bei dem zwei oder mehrere Form- oder Hohlkörperelemente (3, 4, 5; 9, 10, 11, 12) in Spritzgießtechnik hergestellt, im Anschluss daran zusammengefügt und mit Kunststoffschweißtechnik miteinander verbunden werden,
wobei
- die miteinander zu verbindenden Form- oder Hohlkörperelemente (3, 4, 5; 9, 10, 11, 12) jeweils aus mindestens zwei Komponenten im an sich bekannten Mehrkomponentenspritzgießverfahren jeweils separat hergestellt,
- im Bereich der Verbindungsstellen mit der für die jeweilige Komponente vorgegebenen Schmelztemperatur jeweils gleichzeitig aufgeschmolzen,
- und im Anschluss daran unter Einwirkung eines Pressdruckes zusammengefügt werden,
und wobei das Aufschmelzen der verschiedenen Komponenten im Bereich der Verbindungsstelle der Form- oder Hohlkörperelemente (3, 4, 5; 9, 10, 11, 12) durch gezieltes Erhitzen auf die Schmelztemperatur der jeweiligen Komponente erzielt wird.

2. Verfahren nach Anspruch 1, zur Herstellung eines im Wesentlichen rohrförmigen Kunststoffform- bzw. Kunststoffhohlkörpers (1, 2; 7, 8), **dadurch gekennzeichnet, dass** die Verbindungsstellen in eine sich im Wesentlichen über die gesamte Länge des rohrförmigen Kunststoffform- bzw. Kunststoffhohlkörpers (1, 2; 7, 8) erstreckenden Ebene (E) gelegt werden.

3. Verfahren nach Anspruch 2, **dadurch gekennzeichnet, dass** die Ebene von einer einheitlichen, sich im Wesentlichen entlang der Achse des rohrförmigen Kunststoffform- bzw. Kunststoffhohlkörpers (1, 2; 7, 8) erstreckenden Ebene (E) gebildet wird.

4. Verfahren nach Anspruch 2 oder 3, **dadurch gekennzeichnet, dass** die Ebene (E) gekrümmt ausgestaltet wird.

## Claims

1. A method for producing plastics moulded bodies and plastics material hollow bodies (1, 2; 7, 8), preferably to form air conveyance components (6) for internal combustion engines, in which method two or more moulded body elements or hollow body elements (3, 4, 5; 9, 10, 11, 12) are produced in the injection moulding method, are thereafter pieced together and connected together by plastics material welding,
wherein
- the moulded body elements or hollow body elements (3, 4, 5; 9, 10, 11, 12) to be connected together are respectively produced separately in each case from at least two components in the multi-component injection moulding process which is known per se,
- they are melted simultaneously in each case in the region of the joins at the melting temperature which has been preset for the respective component,
- and are thereafter joined together under the effect of a pressing power,
and wherein the different components are melted in the region of the join of the moulded body elements or hollow body elements (3, 4, 5; 9, 10, 11, 12) by heating specifically to the melting temperature of the respective component.

2. A method according to claim 1 for producing a substantially tubular plastics material moulded body or plastics material hollow body (1, 2; 7, 8), **characterised in that** the joins are positioned in a plane (E) which substantially extends over the entire length of the tubular plastics material moulded body or plastics material hollow body (1, 2; 7, 8).

3. A method according to claim 2, **characterised in that** the plane is formed by a uniform plane (E) which substantially extends along the axis of the tubular plastics material moulded body or plastics material hollow body (1, 2; 7, 8).

4. A method according to claim 2 or claim 3, **characterised in that** the plane (E) is configured to be curved.

## Revendications

1. Procédé de fabrication de corps moulés en matériau synthétique ou de corps creux en matériau synthétique (1, 2, 7, 8) de préférence pour la réalisation de composants (6) de guidage d'air dans des moteurs à combustion interne, selon lequel deux ou un plus grand nombre d'éléments de corps moulés ou de corps creux (3, 4, 5, 9, 10, 11, 12) sont fabriqués par la technique de moulage par injection puis assemblés et liés les uns aux autres par la technique de soudage de matériau synthétique,
selon lequel
- les éléments de corps moulés ou de corps creux devant être liés les uns aux autres (3, 4, 5, 9, 10, 11, 12) sont respectivement fabriqués séparément en au moins deux composants selon un procédé de moulage par injection multi-composants connu en lui-même,
- sont respectivement fondus simultanément dans la zone des emplacements de liaison à la température de fusion prédéfinie de chaque composant,
- puis, sont assemblés sous l'action d'une pression de serrage, et
- la fusion des différents composants dans la zone des emplacements de liaison des éléments de corps moulés ou de corps creux (3, 4, 5, 9, 10, 11, 12) est effectuée par chauffage approprié à la température de fusion de chaque composant.

2. Procédé conforme à la revendication 1,
destiné à la fabrication d'un corps moulé en matériau synthétique ou d'un corps creux en matériau synthétique tubulaire (1, 2, 7, 8)
**caractérisé en ce que**
les emplacements de liaison sont situés dans un plan (E) s'étendant essentiellement sur la totalité de la longueur du corps moulé en matériau synthétique ou du corps creux en matériau synthétique tubulaire (1, 2, 7, 8).

3. Procédé conforme à la revendication 2,
**caractérisé en ce que**
le plan est formé par un plan uniforme (E) s'étendant essentiellement le long de l'axe du corps moulé en matériau synthétique ou du corps creux en matériau synthétique tubulaire (1, 2, 7, 8).

4. Procédé conforme à la revendication 2 ou 3,
**caractérisé en ce que**
le plan (E) est courbe.
